# EUROPEAN PATENT APPLICATION

(11) **EP 2 833 310 A1**
(43) Date of publication of application: **04.02.2015**
(21) Application number: 14178869.5
(22) Date of filing: 29.07.2014
(51) Int. Cl.: G06Q 30/02

(54) **Provisioning a relation between users in a network subsystem**

(30) Priority: 29.07.2013 EP 13178353
(71) Applicant: Koninklijke KPN N.V., 2516 CK The Hague (NL)
(72) Inventor: Veenstra, Pieter, 2518 HR The Hague (NL); Span, Pieter, 3826CN Amersfoort (NL)
(74) Representative: Wuyts, Koenraad Maria

(57) **Abstract**

A system (100) is provided for provisioning a user relation in a network subsystem (080) of a telecommunication network. The system comprises functional units (140-160) for accessing data records (062) indicative of network communications between users of the network subsystem, accessing user profiles (210, 220) on a user profile server (220), analyzing the data records (062) to detect a user relation between a first user and a second user based on the data records showing network communication involving a first user identifier from a first user profile and a second user identifier from a second user profile, and for provisioning the user relation by creating an entry (260) in a database (250) of the network subsystem. The entry (260) comprises references to the first user profile and the second user profile on the user profile serve. By creating the entry (260) for the user relation in the database (250), the user relation is made explicit within the network subsystem (080). Accordingly, the system (100) enables user relations to be automatically provisioned.

## Description

### FIELD OF THE INVENTION

The invention relates to a system for provisioning a relation between users in a network subsystem of a telecommunication network. The invention further relates to a method of using network equipment to provision such a user relation in a network subsystem of a telecommunication network, and to control software comprising instructions operative for executing the steps of the method on equipment of the network subsystem. The invention further relates to a network subsystem of a telecommunication network, such as an Internet protocol Multimedia Subsystem, comprising the aforementioned system.

### BACKGROUND OF THE INVENTION

Telecommunication networks, such as cellular networks or fixed-line networks, have seen extensive change over the last decade. A significant part of the change has been in response to the growing popularity of Internet Protocol (IP) based services. In order to enable such services in existing telecommunication networks, network subsystems have been introduced which enable merging existing services of the telecommunication network with IP based services. A well known example of such a network subsystem is the so-termed Internet protocol Multimedia Subsystem (IMS), which enables a network operator to, amongst others, provide IP based multimedia services to its subscribers.

In order to utilize such services provided by the network subsystem, a user device, such as a Smartphone, a tablet device, etc., typically needs to be provisioned in the network subsystem. Such provisioning of a user device establishes data in the network subsystem which allows the network subsystem to associate the user device with a user of the network subsystem, i.e., with a subscriber. For example, in IMS, a user device may be provisioned by creating an entry for the user device in a user profile of the user stored in a Home Subscriber Server (HSS) of the network subsystem. It is noted that the HSS or its functionality is also referred to by the term User Profile Server Function (UPSF).

In addition to user devices being provisioned in the network subsystem, also the users themselves are provisioned in the network subsystem. Such provisioning of users is commonly understood as referring to a user profile being created for the user on the user profile server, typically as part of a Customer Relation Management (CRM) process.

### SUMMARY OF THE INVENTION

The inventors have recognized that it is desirable to also enable provisioning of a *relation* between users in the network subsystem. By provisioning such a user relation in the network subsystem, the relation between the users can be made explicit and open for use by services, such as those provided by application servers in the network subsystem.

It would be advantageous to obtain a system, method and control software which enables a relation between users to be provisioning in the network subsystem.

A first aspect of the invention provides a system provisioning a relation between users in a network subsystem of a telecommunication network, comprising:
- an analysis subsystem for:
   i) accessing data records being indicative of network communications between users of the network subsystem;
   ii) accessing user profiles on a user profile server, each of the user profiles comprising one or more user identifiers of a respective user; and
   iii) analyzing the data records to detect a user relation between a first user and a second user based on the data records showing network communication involving a first user identifier from a first user profile and a second user identifier from a second user profile; and
- a provisioning subsystem for provisioning the user relation by creating an entry in a database of the network subsystem, the entry comprising references to the first user profile and the second user profile on the user profile server.

A further aspect of the invention provides a method of using network equipment for provisioning a relation between users in a network subsystem of a telecommunication network, comprising:
- accessing data records being indicative of network communications between users of the network subsystem;
- accessing user profiles on a user profile server, each of the user profiles comprising one or more user identifiers of a respective user;
- analyzing the data records to detect a user relation between a first user and a second user based on the data records showing network communication involving a first user identifier from a first user profile and a second user identifier from a second user profile; and
- provisioning the user relation by creating an entry in a database of the network subsystem, the entry comprising references to the first user profile and the second user profile on the user profile server.

A further aspect of the invention provides control software for provisioning a relation between users in a network subsystem of a telecommunication network, the control software comprising instructions for execution on network equipment, the instructions being operative for:
- accessing data records being indicative of network communications between users of the network subsystem;
- accessing user profiles on a user profile server, each of the user profiles comprising one or more user identifiers of a respective user;
- analyzing the data records to detect a user relation between a first user and a second user based on the data records showing network communication involving a first user identifier from a first user profile and a second user identifier from a second user profile; and
- provisioning the user relation by creating an entry in a database of the network subsystem, the entry comprising references to the first user profile and the second user profile on the user profile server.

The above measures may be carried out by network equipment, such as a relationship management server, comprised in or connected to the network subsystem. The network subsystem may be a part of a telecommunication network of a network operator. The system comprises an analysis subsystem which accesses data records within the network subsystem. The data records document or show network communications between users of the network subsystem. Accordingly, the analysis subsystem can obtain access to a machine-readable record of such network communications. The analysis subsystem can also communicate with a user profile server to obtain access to user profiles of such users of the network subsystem. The user profiles each comprise at least one user identifier of a respective user. The user identifier constitutes information which uniquely identifies the user. For example, the user identifier may constitute a phone number, an e-mail address, etc. As another example, within IMS, the user identifier may be a public user identity of a user.

The analysis subsystem analyzes the data records to determine whether a user relation exists between a first user and a second user. Here, the occurrence of network communication which involves multiple user identifiers can be considered as an indication that a user relation exists between the users to which the respective user identifiers belong. In determining the association between a user identifier and a user, the analysis subsystem can make use of the user profiles, e.g., by looking up a user profile on the user profile server which comprises the user identifier and thereby identifying the user.

The provisioning subsystem provisions the user relation by creating an entry for the user relation in a database of the network subsystem. Accordingly, data is entered into the database which makes the user relation explicit within the network subsystem. In particular, the data comprises a reference to the first user profile and a further reference to the second user profile on the user profile server, thereby linking the entry to both user profiles.

The above measures have the effect that a user relation can be provisioned in the network subsystem. In particular, by accessing data records which are indicative of network communications between users of the network subsystem and by combining such information with the information of user profiles of such users, the system gains access to information such as, e.g., which users communicate with each other, their frequency of communication, their type of communication, etc. The inventors have recognized that this information can be used to automatically determine whether a user relation exists between two or more users. Accordingly, the present invention provides an analysis subsystem which can analyze the data records to determine the user relation between a first user and a second user. By creating the entry for the user relation in the database, the user relation can be made explicit within the network subsystem since the entry identifies each user's profile on the user profile server. Accordingly, network elements such as application servers are enabled to make use of the user relation in their services, to offer services based on the user relation, etc.

An advantage of the present invention may be that the user relation enables both users to be jointly addressed, i.e., by consulting a single entry in the database to access both user profiles, and accordingly, to access any addressable user identifiers contained therein. Another advantage may be that the user relation can be provisioned in the network subsystem even in cases where the user profile server, which otherwise provides the provisioning of users and user devices in the network subsystem, is unable to provision user relations. Yet another advantage may be that the user relation can be provisioned automatically by the system. Hence, it is not needed to provision the user relation by introducing CRM processes which are suitable for that purpose. Compared to such CRM-based provisioning, the automatic provisioning can quicker react to changes in the user relation. For example, if a family member buys a new mobile phone, data records such as call detail records may soon indicate frequent network communication occurring between the new mobile phone and the mobile phone of other members of the family, thereby indicating to the analysis subsystem that a user relation exists between both users. Accordingly, upon the user relation being provisioned by the system, the new mobile phone can be automatically included in a family plan, e.g., by an application server which is connected to the database. In contrast, the family member may otherwise forget contacting the customer service to request inclusion of the mobile phone in the family plan.

In an embodiment, the first user profile may comprise a first addressable user identifier of the first user and the second user profile may comprise a second addressable user identifier of the second user, and the entry may comprise references to the first addressable user identifier and the second addressable user identifier. The entry may thus directly refer to an addressable user identifier of each of the users. Addressable user identifiers are user identifiers which allow the user to be addressed, e.g., by constituting an e-mail address, phone number, etc. For example, if the addressable user identifiers are phone numbers of each of the users, the provisioning subsystem may create the entry to directly refer to said phone numbers. An advantage of this embodiment may be that, upon consulting the entry in the database, both users may be directly addressed via the addressable user identifiers, without having to otherwise analyze the user profiles for addressable user identifiers.

In an embodiment, the provisioning subsystem may be arranged for creating a public service identity on the user profile server to identify a service of an application server which makes use of the entry in the database to address the first user and the second user. Public service identities may be used to publically identify services within the network subsystem. By creating a public service identity, the user relation may be made available for use within the network subsystem in that a service which is linked to, and makes use of, the user relation may be publically identified within the network subsystem. For example, the public service identity may identify a manager-secretary group-service, in which a call to the public service identity results in the mobile phone of the manager and the secretary both ringing. An advantage of this embodiment may be that it enables the use of the user relation by way of the user profile server, even in cases where the user profile server cannot provision such user relations. Rather, the public service identity may be used to refer to an application server which makes use of the user relation as provisioned in a database.

In a further embodiment, the database may be provided by a centralized database of the network subsystem which also stores the user profiles of the user profile server. The entry for the user relation may thus be created in a same centralized database in which the user profiles of the user profile server are stored. An advantage of this embodiment may be that the user relations may be stored centrally within the network subsystem, thereby avoiding the need for application servers or other network entities to access a separate, e.g., internal, database to use the user relation. In particular, the centralized database may enable various kinds of user data, including the user profiles and the user relations, to be made easily accessible from a central location rather than being distributed over separate databases.

In a further embodiment, the analysis subsystem may be arranged for detecting a pattern in the network communication involving the first user identifier and the second user identifier, and the provisioning subsystem may be arranged for creating the entry for the user relation in the database based on the pattern. In addition to detecting that a user relation exists between the first user and the second user, the analysis subsystem may also detect a pattern, i.e., a perceivable structure, in the network communication that involves the user identifiers of both users. Such a pattern may provide additional information relating to the user relation, and may be detected using techniques which are known per se from the field of data analysis. The provisioning subsystem may use the additional information when creating the entry for the user relation. An advantage of this embodiment may be that the entry for the user relation may be created to better reflect the actual user relation.

In a further embodiment, the provisioning subsystem may be arranged for provisioning the user relation in the network subsystem based on user interaction with at least the first user. The provisioning subsystem may thus involve the first user, and possibly also the second user, in the provisioning of the user relation. An advantage of this embodiment may be that the user may influence the provisioning of the user relation, thereby obtaining a degree of control over the otherwise autonomous provisioning of the user relation.

In a further embodiment, the provisioning subsystem may further comprise a user interface subsystem for communicating with the first user by addressing a user device identified by the first user profile. The user may thus be involved in the provisioning of the user relation via a user device of the user, e.g., by receiving messages and responding to said messages via the user device. An advantage of this embodiment may be that it may be convenient for the user to interact with provisioning subsystem.

In a further embodiment, the provisioning subsystem may be arranged for obtaining authorization from the first user via the user interface subsystem before provisioning the user relation in the network subsystem. Thus, the provisioning system does not autonomously provision the user relation in the network subsystem, but rather may obtain authorization beforehand. An advantage of this embodiment may be that the user may maintain full control of whether or not the user relation is provisioned in the network subsystem. Accordingly, the user may prevent erroneously detected user relations from being autonomously provisioned in the network subsystem, subject the provisioning to his/her preferences, etc.

In a further embodiment, the provisioning subsystem may be arranged for enabling the first user to manage user relations which are provisioned in the network subsystem via the user interface subsystem. The user may thus be enabled to manage provisioned user relations. For example, the user may be presented with a user interface on a display of the user device which enables the user to view, add, remove or otherwise manage the user relations which involve the user's user device or are otherwise associated with the user. This embodiment may have as an advantage that the user may be provided with control over provisioned user relations.

In a further embodiment, the provisioning subsystem may be further arranged for removing the entry for the user relation from the database based on the analysis subsystem detecting an absence of network communication between the first user and the second user. In addition to autonomously provisioning a user relation, i.e., by creating an entry for the user relation, the provisioning subsystem may be further arranged for de-provisioning a user relation, i.e., by deleting the entry for the user relation from the database. An advantage of this embodiment may be that the system may quickly react to changes in the user relations, and in particular, to such user relations ceasing to exist. It is therefore not needed to de-provision the user relation by introducing suitable CRM processes.

In a further embodiment, the data records may comprise call detail records and/or monitoring records. Such data records are particularly well suited as basis for detecting a user relation since they well reflect the network communication between users.

In a further embodiment, a network subsystem may be provided comprising the system set forth.

In a further embodiment, the network subsystem may be an Internet Protocol Multimedia Subsystem.

It will be appreciated by those skilled in the art that two or more of the above-mentioned embodiments, implementations, and/or aspects of the invention may be combined in any way deemed useful.

Modifications and variations of the method and/or the control software, which correspond to the described modifications and variations of the system, can be carried out by a person skilled in the art on the basis of the present description.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a system for detecting a user relation between a first user and a second user and for provisioning the user relation by creating an entry in a database;
Fig. 2 shows the entry comprising a first reference to the first user profile on the user profile server and a second reference to the second user profile;
Fig. 3 shows a public service identity having been created by the system on the user profile server to identify a service of an application server which makes use of the entry in the database to address the first user and the second user;
Fig. 4 shows a message exchange between the system, the user profile server and the database to effect the provisioning of the user relation;
Fig. 5 shows a method of using network equipment, such as a relation management system, to provision the user relation in the network subsystem; and
Fig. 6 shows a computer readable medium comprising control software for executing the steps of the method on network equipment;

It should be noted that items which have the same reference numbers in different Figures, have the same structural features and the same functions, or are the same signals. Where the function and/or structure of such an item has been explained, there is no necessity for repeated explanation thereof in the detailed description

### DETAILED DESCRIPTION OF EMBODIMENTS

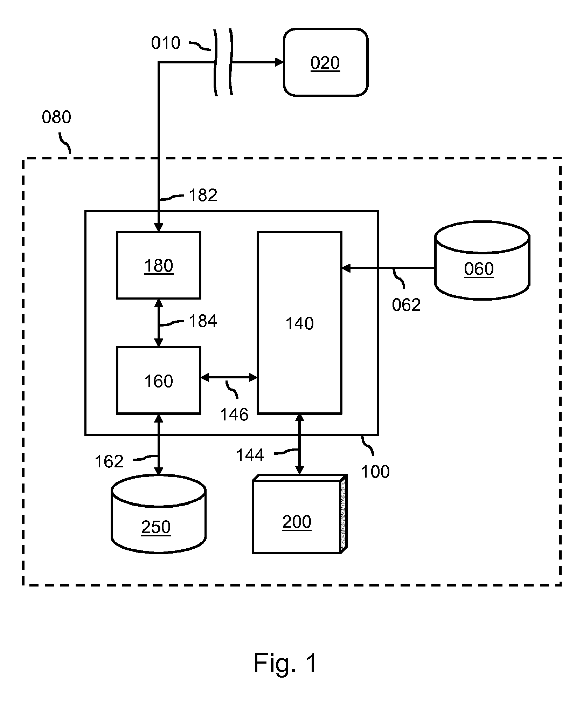

Fig. 1 shows a system 100 for provisioning a relation between users in a network subsystem 080 of a telecommunication network. The system 100 comprises an analysis subsystem 140 for accessing data records 062 which are indicative of network communications between users of the network subsystem. Fig. 1 shows the analysis subsystem 140 being connected to a records database 060 which comprises the data records 062. Examples of such data records 062 include call detail records and monitoring records. Instead of accessing the data records 062 from a single database, however, the analysis subsystem 140 may also be arranged for accessing data records 062 from a number of different databases within the network subsystem 080. The analysis subsystem 140 may be further arranged for accessing user profiles of users on a user profile server 200. The user profiles each comprise one or more user identifiers of a respective user, such as, e.g., a subscription identifier of the user. The one or more user identifiers may also comprise addressable user identifiers, thereby enabling the respective user to be addressed within the network subsystem 080. Examples of addressable user identifiers include phone numbers, e-mail addresses, network addresses such as IP addresses of user devices, etc.

The analysis subsystem 140 may be arranged for analyzing the data records 062 to detect a user relation between a first user and a second user based on the data records 062 showing network communication involving a first user identifier from a first user profile and a second user identifier from a second user profile. In order to associate a user identifier from the data records 062 with a particular user profile and thus with a particular user, the analysis subsystem 140 is shown to communicate with the user profile server 200 via an exchange of messages 144, e.g., to search for user identifiers on the user profile server 200, thereby identifying a first user profile of a first user and a second user profile of a second user.

The system 100 further comprises a provisioning subsystem 160 for provisioning the user relation by creating an entry in a database 250 of the network subsystem. For creating the entry, the provisioning subsystem 160 is shown to communicate with the database 250 via an external exchange of messages 162 and with the analysis subsystem 140 via an internal exchange of messages 146. The provisioning subsystem 160 creates the entry to comprise a reference to the first user profile and a reference to the second user profile on the user profile server 200. For example, the entry may refer to a subscription entry for each of the users on the user profile server 200. Alternatively or additionally, the entry in the database 250 may comprise references to user identifiers in each of the user's user profiles, e.g., to a private user identity or a public user identity of each user.

The operation of the system 100 may be briefly explained as follows. The analysis subsystem 140 accesses the data records 062 which are indicative of network communications between users of the network subsystem. The analysis subsystem 140 further accesses the user profiles on the user profile server 200. The analysis subsystem 140 further analyzes the data records 062 to detect the user relation between the first user and the second user based on the data records 062 showing network communication involving a first user identifier from a first user profile and a second user identifier from a second user profile. The provisioning subsystem 160 then provisions the user relation for both users by creating the entry in the database 250 of the network subsystem, the entry comprising references to the first user profile and the second user profile on the user profile server 200.

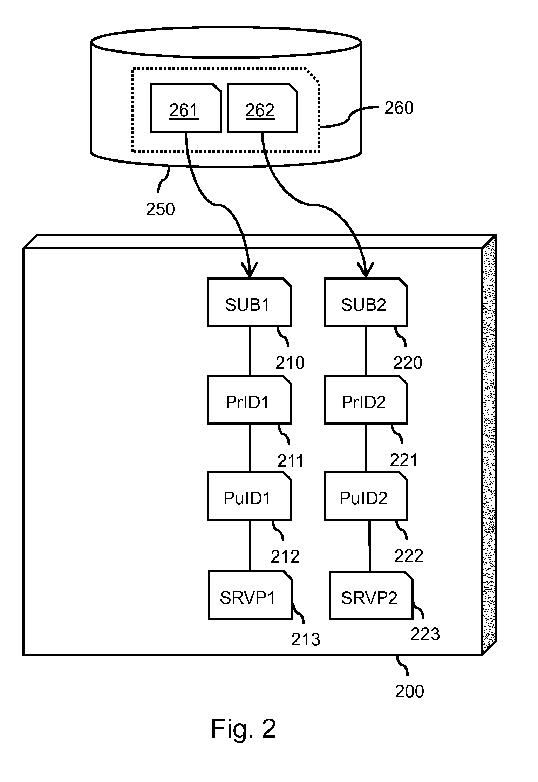

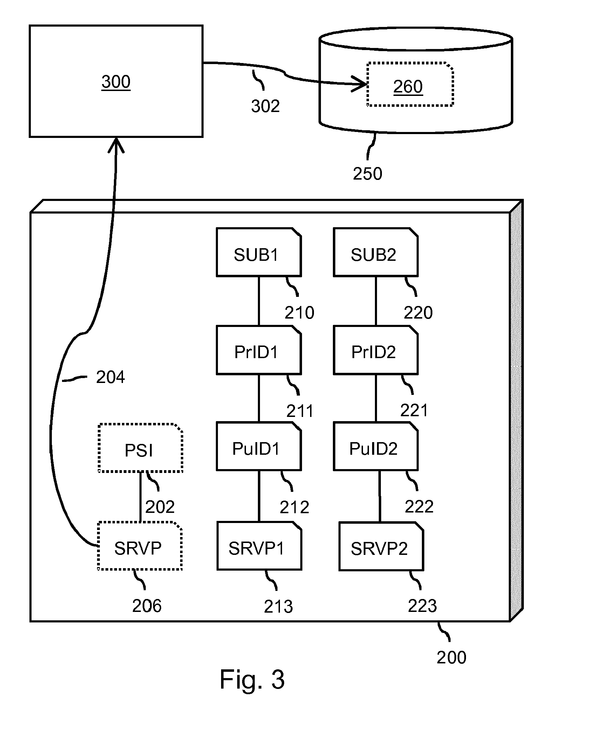

Figs. 2 and 3 illustrate the provisioning of the user relation in more detail, and will be explained in the following. Thereafter, further reference will be made to Fig. 1.

Fig. 2 shows the database 250 and the user profile server 200 in more detail, and in particular, illustrates the entry 260 in the database 250 comprising references 261, 262 to the first user profile and the second user profile on the user profile server 200. Fig. 2 shows the user profile server 200 comprising the user profiles, e.g., in an internal database. It is noted that, alternatively, the user profiles may be accessed via the user profile server 200 but rather be stored on a centralized database within the network subsystem. The database 250 may also be provided by such a centralized database. Consequently, the references 261, 262 may constitute references to another part of such a centralized database.

In the example of Fig. 2, the user profile server 200 is chosen to be an HSS of an IMS. Accordingly, the user profiles as shown correspond to those of an HSS. It will be appreciated, however, that the following aspects of the invention are also applicable in general to network subsystems and user profile servers comprised therein.

The user profile server 200 is shown to comprise a first IMS subscription entry 210 for a first user and a second IMS subscription entry 220 for a second user. Each IMS subscription entry reflects a root entry of the user profiles of each respective user. Fig. 2 further shows a first private user identity 211 which is linked to the first IMS subscription entry 210 and a second private user identity 221 which is linked to the second IMS subscription entry 220. Each of the private user identities 211, 221 may be assigned to a Session Initiation Protocol (SIP) User Agent (UA), with the SIP UA being typically provided by a user device of each respective user, e.g., a mobile phone of each user. Moreover, the first private user identity 211 is shown to be linked to a first public user identity 212 and the second private user identity 221 is shown to be linked to a second public user identity 222. Said public user identities 212, 222 allow the corresponding user devices to be addressed from within the IMS, and may comprise, e.g., a phone number, an e-mail address, a network address such as an IP address, a Uniform Resource Locator (URL), etc. Moreover, the public user identities 212, 222 are shown to be connected to service profiles 213, 223, namely the first public user identity 212 being connected to a first service profile 213 and the second public user identity 222 being connected to a second service profile 223.

It is noted that both user profiles and thus both users may have been identified by the analysis subsystem by the data records showing network communication involving, on the one hand, the first public user identity 211 and/or the first private user identifier 212, and on the other hand, the second public user identity 211 and/or the second private user identifier 222. Alternatively, the analysis subsystem may make use of other user identifiers from each of the user profiles which have not been shown in Fig. 2.

Fig. 2 shows a result of the provisioning subsystem creating the entry 260 for the user relation to comprise references to the first user profile and the second user profile on the user profile server 200. In the example of Fig. 2, this is shown schematically by means of a first part 261 of the entry 260 in the database 250 referring to the first IMS subscription entry 210 and a second part 262 of the entry 260 in the database 250 referring to the second IMS subscription entry 220. To implement such a reference, the entry 250 may comprise an address of each of the IMS subscription entries 210, 220, i.e., each reference 261, 262 may be constituted by an address. As a result, a network entity such as an application server may be enabled to look up the user profiles 210, 220 of each respective user involved in the user relation. Additionally or alternatively, the entry 260 may also comprise references to other user identifiers in each of the user profiles, e.g., to the first public user identity 212 in the first user profile and to the second public user identity 222 in the second user profile. This also allows the network entity to look up the user profiles 210, 220, but may additionally also identify a particular user identifier such as an addressable user identifier of a user device.

Fig. 3 shows another optional aspect of the system, in that the provisioning subsystem may be arranged for creating a public service identity 202 on the user profile server 200 to identify a service of an application server 300 which makes use of the entry 260 in the database 250 to address the first user and the second user. As a result, the user profile server 200 is shown to comprise a public service identity 202, thereby enabling the service to be identified from within the HSS. Fig. 3 further shows the public service identity 202 being linked to a service profile 206 which refers to the application server 300.

The above described creating of the public service identity 202 enables functionality such as the following example. An IMS client may desire to place a call to a particular user. However, instead of providing a public user identity to identify the particular user, the client may identify a public service identity 202. As a result, the call may be set-up based on the public service identity 202 linking to the service profile 206, which refers to the application server 300, which in turn accesses the entry 260 in the database 250 to route the call using the first public user identity 212 of the first user and the second public user identity 222 of the second user. As a result, a conference call with the first user and the second user may be established. In this example, the first user may be a manager and the second user may be the manager's secretary. The user relation as provisioned by the system may therefore allow the manager's secretary to be automatically included in a call to the manager.

It will be appreciated that the system may provision user relations between more than two users, namely by detecting a user relation between multiple users based on the data records showing network communication involving user identifiers from multiple different user profiles, and by creating the entry in the database to comprise references to each of multiple user profiles. In addition, it will be appreciated that various other types of services may be provided based on the provisioned user relation, and that the present invention is not limited to the manager-secretary group-service as described above. In particular, provisioned user relations may be used by application servers and services to conveniently and quickly initialize multiuser communication sessions within IMS.

For example, an instant message addressed to a public service identifier that is associated with multiple users may result in individual messages being sent to each user. Another example is that a presence request to the public service identifier may be decomposed into individual presence requests. Yet another example is that an INVITE being send to the public service identifier may result in a conference session being automatically started between the multiple users. Provisioned user relations may also be used within application servers to define, e.g., black or white lists. For example, an application server may provide parental control settings that allow children to only make and receive calls/messages from related users, i.e., those which have a user relation with the children.

Provisioned user relations may further identify device or service capabilities, such as a central voicemail box for all related users or a media server that is automatically included in the above mentioned conference session. The latter may provide media functions to optimally support the interworking between devices or endpoints that are involved in the conference session. Provisioned user relations may also be used in content delivery towards all related users or in the content sharing between the users. For example, within IMS, an application server may provide a user access to content by delivering a certain URL in a SIP message or by redirecting the user to the URL by means of a SIP REFER message. When the content is paid content, IMS can support the required authentication and, as described above, the access authorization. Such content delivery can be extended with multiuser relations, e.g., by allowing the user to share the paid content only with users that are related. Another content delivery case may be advertising. Here, the provisioned user relation may provide additional context information which may be advantageously used by the advertising party.

Further referring to Fig. 1, the network subsystem 080 is shown here to comprise the records database 060, the user profile server 200, and the database 250. It will be appreciated that a network subsystem typically comprises more functional elements. However, these have been omitted in Fig. 1 for clarity reasons. Moreover, although not shown in Fig. 1, the network subsystem 080 may be part of a telecommunications network of the network operator, e.g., a wired or wireless network. The network subsystem 080 is also shown to comprise the system 100. Alternatively, the system 100 may be located outside of the network subsystem 080, e.g., elsewhere in the network, while being connected to the network subsystem 080. For example, the system 100 may implemented as part of a user management system which is connected to the network subsystem 080. Here, the term user management system refers to a network entity which is traditionally used in CRM-based provisioning of users, user devices, etc. The system 100 may be implemented in such a user management system, thereby effectively yielding a user and relation management system.

Fig. 1 shows a further optional aspect of the system 100, in that the provisioning subsystem 160 may be arranged for provisioning the user relation in the network subsystem 080 based on user interaction with at least the first user. In particular, Fig. 1 shows the system 100 comprising a user interface subsystem 180 for communicating with the first user by addressing a user device 020 identified by the first user profile. The user device 020 may be identified by, e.g., the first public user identity from the first user profile. Alternatively, the user device 020 may be identified in the first user profile by another addressable user identifier. Fig. 1 shows the user device 020 being connected to the network subsystem 080 via an access network 010. Examples of such access networks include wired access networks such as Digital Subscriber Line (DSL) and Fiber-optic access networks and wireless access networks such as Universal Mobile Telecommunications System (UMTS) access network. The user device 020 may be a mobile phone, tablet, laptop, etc.

The user interface subsystem 180 may communicate with the first user via the user device 020 to establish the user interaction. The communication may involve an exchange of messages 182. The messages 182 may be constituted by SMSes, Instant Messages (IM), e-mails, etc, which are exchanged directly between the user and the system 100. Alternatively, the messages 182 may be network messages which establish a user interface on the user device 020, such as HTTP messages which define a webpage to be displayed on the user device 020. The provisioning subsystem 160 may be arranged for obtaining authorization from the user via the user interface subsystem 180 before provisioning the user relation in the network subsystem 080. For example, the provisioning subsystem 160 may send an IM message to the user to query the user on the provisioning of the user relation. The user may then authorize the provisioning of the user relation by affirmatively responding to the IM message, or not authorize said provisioning by negatively or not responding to the IM message. The provisioning subsystem 160 may also be arranged for enabling the user to manage user relations which are provisioned in the network subsystem 080 via the user interface subsystem 180. The user relations may be those associated with the first user. For that purpose, the user interface subsystem 180 may establish a user interface on the user device 020 which allows the user to view, add, remove or otherwise manage the user relations. The user interface may be a graphical user interface for being displayed on a display of the user device 020. It will be appreciated, however, that the user interface may also take different forms, e.g., a voice menu in which the system 100 establishes the user interaction via speech synthesis and recognition.

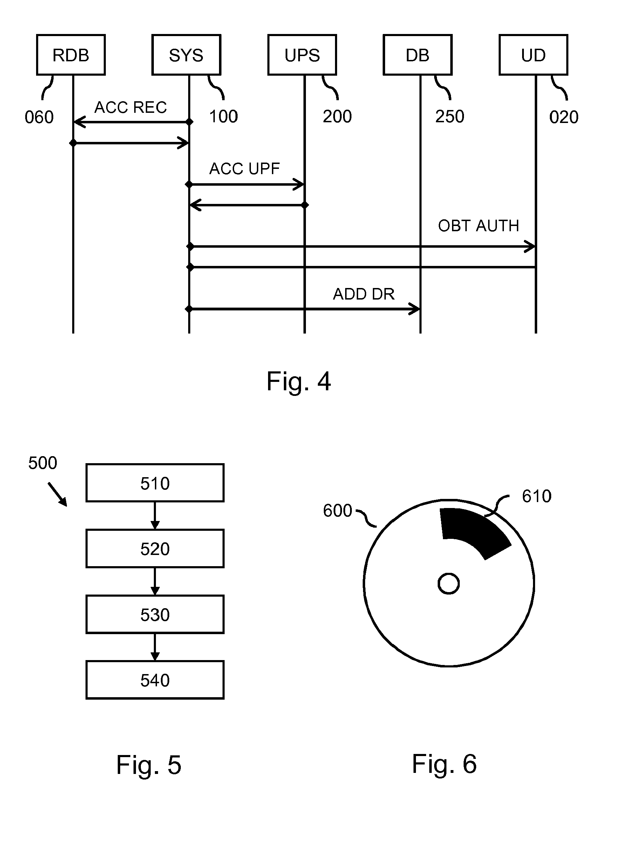

Fig. 4 shows an example of message exchanges by which the user relation may be provisioned in the network subsystem. Each network entity and user device is indicated in Fig. 4 by means of their abbreviation, namely RDB for the records database 060, SYS for the system 100, UPS for the user profile server 200, DB for the database 250 and UD for the user device 020. The vertical axis corresponds to time. The message exchange may be as follows. The system 100 accesses data records on the records database 060 by means of a message exchange titled "ACC REC". After or during the analysis of the data records, the system 100 locates a first user profile and a second user profile on the user profile server 200 by means of a message exchange titled "ACC UPF". Optionally, the system 100 may obtain authorization for provisioning the user relation by means of a message exchanged titled "OBT AUTH" with a user device 020 of the first user. Finally, the system 100 provisions the user relation in the network subsystem by creating the entry 260 for the user relation in the database 250 using a request titled "ADD DR".

Fig. 5 shows a method 500 of using network equipment for provisioning a relation between users in a network subsystem of a telecommunication network. The method 500 may correspond to an operation of the system of Fig. 1. It will be appreciated, however, that the method 500 may also be performed in separation of said system.

The method 500 comprises, in a first step titled "ACCESSING DATA RECORDS", accessing 510 data records being indicative of network communications between users of the network subsystem. The method 500 further comprises, in a second step titled "ACCESSING USER PROFILES", accessing 520 user profiles on a user profile server, each of the user profiles comprising one or more user identifiers of a respective user. The method 500 further comprises, in a third step titled "DETECTING USER RELATION", analyzing 530 the data records to detect a user relation between a first user and a second user based on the data records showing network communication involving a first user identifier from a first user profile and a second user identifier from a second user profile. The method 500 further comprises, in a fourth step titled "PROVISIONING USER RELATION", provisioning 540 the user relation by creating an entry in a database of the network subsystem, the entry comprising references to the first user profile and the second user profile on the user profile server. It is noted that the above steps may be performed in any suitable order. In particular, the second step and the third step may be performed simultaneously manner in that user profiles may be accessed while the data records are analyzed.

Fig. 6 illustratively shows control software 610 comprising instructions for executing the steps of the method of Fig. 5 on network equipment of the network. The control software 610 may be comprised on a computer readable medium 600, for example in the form of as a series of machine readable physical marks and/or as a series of elements having different electrical, e.g., magnetic, or optical properties or values.

In general, the provisioning subsystem may be arranged for removing the entry for the user relation from the database. This may be triggered by the user requesting the entry to be removed, e.g., via the user interface subsystem. Alternatively or additionally, the analysis subsystem may be arranged for detecting an absence of network communication between the first user and the second user. For example, the analysis subsystem may detect that, in a past period, no network communication occurred which involved user identifiers of both the first user and the second user. Accordingly, the analysis subsystem may determine that the user relation ceased to exist and thus remove the entry for the user relation.

Furthermore, rather than solely or primarily analyzing the data records for an occurrence of network communication involving a first user identifier from a first user profile and a second user identifier from a second user profile, the analysis subsystem may be arranged for detecting a pattern in the network communication involving the first user identifier and the second user identifier. For example, the analysis subsystem may employ techniques which are known from the field of data analysis, and in particular those known from the field of big data analysis. Having detected a pattern in the network communication, the provisioning subsystem may be arranged for creating the entry for the user relation in the database based on the pattern. In particular, the provisioning subsystem may establish a type of the entry based on the pattern. For example, if the analysis subsystem determines that the network communication between the first user and the second user fits that of family members, the provisioning subsystem may create the entry to denote said fact, e.g., by including appropriate metadata in the entry in the database.

It is further noted that the data records may be constituted by various sources of information within the network subsystem. For example, in addition or alternative to call detail records and/or monitoring records, the data records may indicate the type of the network communication, e.g., SMS, instant messaging, voice calls, video calls etc. The data records may also indicate whether the users predominantly share content, whether a voice call follows after an exchange of SMSes or instant messages, etc. The data records may also indicate location information of the users and/or the user devices. Accordingly, the analysis subsystem may determine the user relation not only based on the mere occurrence of network communication between the first user and the second user, but also based on, e.g., a common or specific location of both users at a time of the network communication.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. Accordingly, said article is understood as referring to "one or more" elements and vice versa. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. System (100) for provisioning a relation between users in a network subsystem (080) of a telecommunication network, the system comprising:
- an analysis subsystem (140) for:
i) accessing data records (062) being indicative of network communications between users of the network subsystem;
ii) accessing user profiles (210, 220) on a user profile server (200), each of the user profiles comprising one or more user identifiers of a respective user; and
iii) analyzing the data records (062) to detect a user relation between a first user and a second user based on the data records showing network communication involving a first user identifier from a first user profile (210) and a second user identifier from a second user profile (220); and
- a provisioning subsystem (160) for provisioning the user relation by creating an entry (260) in a database (250) of the network subsystem, the entry comprising references (261, 262) to the first user profile and the second user profile on the user profile server.

2. System (100) according to claim 1, wherein the first user profile (210) comprises a first addressable user identifier (261) of the first user and the second user profile (220) comprises a second addressable user identifier (262) of the second user, and wherein the entry (260) comprises references to the first addressable user identifier (261) and the second addressable user identifier (262).

3. System (100) according to claim 1 or 2, wherein the provisioning subsystem (160) is arranged for creating a public service identity (202) on the user profile server (200) to identify a service of an application server (300) which makes use of the entry (260) in the database (250) to address the first user and the second user.

4. System (100) according to any one of the above claims, wherein the database (250) is provided by a centralized database of the network subsystem which also stores the user profiles (210, 220) of the user profile server (200).

5. System (100) according to any one of the above claims, wherein the analysis subsystem (140) is arranged for detecting a pattern in the network communication involving the first user identifier and the second user identifier, and wherein the provisioning subsystem (160) is arranged for creating the entry (260) for the user relation in the database (250) based on the pattern.

6. System (100) according to any one of the above claims, wherein the provisioning subsystem (160) is arranged for provisioning the user relation in the network subsystem (080) based on user interaction with at least the first user.

7. System (100) according to claim 6, further comprising a user interface subsystem (180) for communicating with the first user by addressing a user device (020) identified by the first user profile (210).

8. System (100) according to claim 7, wherein the provisioning subsystem (160) is arranged for obtaining authorization from the first user via the user interface subsystem (180) before provisioning the user relation in the network subsystem (080).

9. System (100) according to claim 7 or 8, wherein the provisioning subsystem (160) is arranged for enabling the first user to manage user relations which are provisioned in the network subsystem (080) via the user interface subsystem (180).

10. System (100) according to any one of the above claims, wherein the provisioning subsystem (160) is further arranged for removing the entry (260) for the user relation from the database (250) based on the analysis subsystem (140) detecting an absence of network communication between the first user and the second user.

11. System (100) according to any one of the above claims, wherein the data records (062) comprise call detail records and/or monitoring records.

12. Network subsystem (080) comprising the system (100) according to any one of the above claims.

13. Method (500) of using network equipment for provisioning a relation between users in a network subsystem of a telecommunication network, the method comprising:
- accessing (510) data records being indicative of network communications between users of the network subsystem;
- accessing (520) user profiles on a user profile server, each of the user profiles comprising one or more user identifiers of a respective user;
- analyzing (530) the data records to detect a user relation between a first user and a second user based on the data records showing network communication involving a first user identifier from a first user profile and a second user identifier from a second user profile; and
- provisioning (540) the user relation by creating an entry in a database of the network subsystem, the entry comprising references to the first user profile and the second user profile on the user profile server.

14. Control software (610) for provisioning a relation between users in a network subsystem of a telecommunication network, the control software comprising instructions for execution on network equipment, the instructions being operative for:
- accessing data records being indicative of network communications between users of the network subsystem;
- accessing user profiles on a user profile server, each of the user profiles comprising one or more user identifiers of a respective user;
- analyzing the data records to detect a user relation between a first user and a second user based on the data records showing network communication involving a first user identifier from a first user profile and a second user identifier from a second user profile; and
- provisioning the user relation by creating an entry in a database of the network subsystem, the entry comprising references to the first user profile and the second user profile on the user profile server.
